# EUROPÄISCHE PATENTSCHRIFT

(11) **EP 2 160 364 B1**
(45) Veröffentlichungstag und Bekanntmachung des Hinweises auf die Patenterteilung: **28.11.2018**
(21) Anmeldenummer: 08749123.9
(22) Anmeldetag: 25.04.2008
(51) Int. Cl.: C03B 5/04, C03B 5/193, C03B 5/235, C03B 5/20

(54) **GLASSCHMELZOFEN UND VERFAHREN FÜR DAS ERSCHMELZEN VON GLÄSERN**
GLASS MELTING FURNACE AND METHOD FOR MELTING GLASS
FOUR DE FUSION DU VERRE ET PROCÉDÉ POUR RÉALISER LA FUSION DE VERRES

(30) Priorität: 12.06.2007 DE 102007027044
(43) Veröffentlichungstag der Anmeldung: 10.03.2010
(73) Patentinhaber: Beteiligungen Sorg GmbH & Co. KG, 97816 Lohr am Main (DE)
(72) Erfinder: SORG, Helmut, 63864 Glattbach (DE)
(74) Vertreter: Keil & Schaafhausen Patent- und Rechtsanwälte PartGmbB
(86) Internationale Anmeldenummer: PCT/EP2008/003340
(87) Internationale Veröffentlichungsnummer: WO 2008/151693

(56) Entgegenhaltungen:
- EP-A- 0 293 545
- EP-A- 0 638 525
- EP-A- 0 864 543
- EP-A- 0 949 210
- US-A- 3 198 618
- US-A- 5 655 464
- US-A- 5 807 418
- SIMS R: "TECHNOLOGIES DE FUSION DU VERRE SORG//SORG GLASS MELTING TECHNOLOGY" VERRE, INSTITUT DU VERRE, PARIS, FR, Bd. 8, Nr. 3, 1. Juni 2002 (2002-06-01), Seiten 32-38, XP001123093 ISSN: 0984-7979

## Beschreibung

Die Erfindung betrifft einen Glasschmelzofen für das Erschmelzen von Gläsern, insbesondere aus der Gruppe der Kalk-Natrongläser, insbesondere Behälterglas, oder Flachglas für Walzprozesse und technische Gläser, insbesondere Borosilikatglas oder Neutralglas, mit einer Wanne und einem Oberofen mit einer Ofendecke und einer inneren Gesamtlänge ("Lg"), die gemeinsam einen Vorwärmbereich für Beschickungsgut mit mindestens einem Auslass für Abgase, einen Feuerungsraum mit Brennern, eine sich über die gesamte Wannenbreite erstreckende Bodenerhebung, einen Homogenisierungsbereich, einen Bodendurchlass sowie einen Aufstiegskanal für die Glasschmelze aufweisen, wobei den Brennern ausser einem Anschluss für fossile Brennstoffe eine Gasquelle mit einem Sauerstoffanteil von mindestens 85 Volumensprozent Sauerstoff aufgeschaltet ist, und wobei im Feuerungsraum vor der Bodenerhebung mindestens eine Reihe von Bubblern angeordnet ist. Die Erfindung betrifft ferner ein entsprechendes Verfahren zum Erschmelzen von Gläsern.

Das Dokument EP 0 864 543 B1 enthält eine ausführliche Offenbarung der sich beim Erschmelzen von Glas sehr diametral gegenüberstehenden Probleme wie schlechter Wärmeübergang durch schlechte thermische Leitfähigkeit des Beschickungsguts und der Glasschmelze, die schwierige Homogenisierung der Schmelze durch deren hohe Viskosität, die Gefahr des Ausdampfens von leichtflüchtigen Glaskomponenten durch lange Verweilzeiten auf den Strömungswegen, die unvermeidbare Entstehung von Stickoxiden bei der Verbrennung fossiler Brennstoffe und deren Reduzierung durch Erhöhung des Sauerstoffanteils im Oxidationsgas, die Notwendigkeit hoher Temperaturen von Ofenwänden, Glasschmelze und Verbrennungsgasen, die dadurch bedingte thermische und chemische Belastung der mineralischen Ofen-Baustoffe, die Belastung der Umwelt durch Schadstoffe in den Abgasen, insbesondere durch Stickstoff-Sauerstoff-Verbindungen. Einerseits wird durch die Erhöhung des Sauerstoffanteils im Oxidationsgas zu Lasten des Stickstoffs die Bildung gefährlicher Stickoxide verringert, andererseits sinkt dadurch die Menge der Verbrennungsgase, so dass bei gegebenem Ofenvolumen die Strömungsgeschwindigkeiten und damit die notwendigen Wärmeübergänge verringert werden. Auch die gesamte Oberfläche des Ofens verursacht je nach Grösse Energiekosten, sei es durch Wärmeleitung und Abstrahlung, sei es durch Kühlung von kritischen Komponenten. Dies gilt auch für beheizte externe Aggregate.

Eine Lösung dieser Probleme wurde auch in der Vermeidung von Strahlungswänden im Oberofen gesehen, die aus weiterem Stand der Technik durchaus bekannt sind. Der Ofentyp nach der EP 0 864 543 B1, im Branchenjargon bekannt als "Boro-Oxy-Melter", hat sich über viele Jahre bestens bewährt. Zwischenzeitlich haben sich jedoch die behördlichen Vorschriften für den spezifischen Energieverbrauch und die Belastung der Umwelt sowohl durch den Energieverbrauch als auch durch Abgase, sei es bei den Energielieferanten, sei es durch den Betrieb des Glasschmelzofens selbst, drastisch verschärft, so dass die obigen komplexen Zusammenhänge neu durchdacht werden müssen.

Nicht nur wirtschaftliche Gründe zwingen bei der Glasherstellung zu Konzepten für die Schmelzanlage, bei der die Wärmeausnutzung, der Wärmeübergang zum Schmelzgut und die Wärmeverluste der gesamten Anlage nach technischem Stand alles ausschöpfen, was die bisherigen Erfahrungen und Erkenntnisse erlauben. Es kommt hinzu, dass die Emission von Stickoxiden in den Abgasen durch die bestehenden gesetzlichen Grenzwerte deutlich eingeschränkt sind und in Zukunft noch weiter eingeschränkt werden. Neben der Wirtschaftlichkeit gewinnt die Emission von Treibhausgasen zunehmend an Bedeutung. Dazu zählt das Kohlendioxid aus der Verbrennung der fossilen Brennstoffe in der Schmelzanlage. Die Mengen werden den Betreibern zugeteilt. Auf Emissionen, die über die zugeteilte Menge hinausgehen, werden dem Betreiber Pönalen auferlegt.

Für die fossil beheizten Schmelzanlagen ist es bekannt, dass eine Wärmerückgewinnung aus den Abgasen und damit eine Luftvorwärmung entscheidend in die Wirtschaftlichkeit der Schmelzanlage eingeht. Ein hoher Grad an Wärmerückgewinnung ist gleichbedeutend mit hohen Verbrennungstemperaturen. Die dem Brennstoff zugeführte Luft resultiert in einer hohen Flammentemperatur. Dies ist auch eine der Hauptursachen für die Bildung des umweltschädlichen Stickoxids. Es ist bekannt, dass man mit einer regenerativen Wärmerückgewinnung im Gegensatz zur rekuperativen Wärmerückgewinnung deutliche höhere Luft-Vorwärmtemperaturen erreicht. Allerdings sind die Emissionen von Stickoxiden dann ebenfalls entsprechend höher.

Um dennoch eine Schmelzanlage mit rekuperativer Beheizung wirtschaftlich darstellen zu können, wurde eine Vorrichtung nach der Druckschrift EP 0 638 525 B1 entwickelt, die einen Glasschmelzofen gemäß dem Oberbegriff des Anspruchs 1 offenbart und die unter der Bezeichnung "LONOX-Melter" Eingang in die Fachsprache gefunden hat. Ein besonderer Aufbau des Brennraumes mit zwei inneren Strahlungswänden sowie eine Wärmerückgewinnung zum Aufheizen der Verbrennungsluft in einem externen Wärmetauscher und der Verzicht auf Bodenelektroden im Beschickungsbereich sind die wesentlichen Merkmale dieser Technologie. Damit ist ein spezifischer Energieverbrauch möglich, der mit einer sehr leistungsfähigen Schmelzanlage mit regenerativer Wärmerückgewinnung vergleichbar ist. Diese Technologie hat jedoch den Nachteil, dass nicht nur der externe Wärmetauscher für die Wärmeübertragung an die Verbrennungsluft benötigt wird, sondern auch eine grosse Wannenlänge und Wannentiefe sowie eine komplexe Gestaltung des Oberofens bzw. der Wannendecke erforderlich sind. Eine grosse Wannentiefe ist dadurch bedingt, weil die heisse Glasschmelze im Bodenbereich wieder bis zum Beschickungsteil zurück geführt werden muss, um die Wirkung der dort fehlenden Bodenelektroden auszugleichen. Mit dem komplexen Aufbau über die gesamten Ofenlänge und die grosse Oberfläche ist aber ein entsprechender Wärmeverlust an die Umgebung verbunden, der auch durch die übliche Wärmedämmung nicht wesentlich verringert werden kann. Dadurch ist die gesamte Anlage von den Investitions- und Betriebkosten her belastet.

Alternativ zu dieser Lösung, die allerdings nur die Emission von Stickoxiden betrifft, gibt es die Möglichkeit der Befeuerung der Schmelzanlage mit fossilem Brennstoff und annähernd reinem Sauerstoff oder Sauerstoff mit einem Reinheitsgrad von mindestens 90 %. Die damit erreichbaren Werte für die Emission von Stickoxiden liegen im Massenstrom der Schadstoffe, bezogen auf das geschmolzene Glas, in einer Grössenordnung, die mit rekuperativer Wärmerückgewinnung möglich ist. Nachteilig ist auch bei dieser Lösung wiederum, dass die Wirtschaftlichkeit nicht verbessert wird. Der Energieverbrauch lässt sich bekanntermassen mit der Umstellung auf eine Brennstoff-Sauerstoff-Beheizung senken, jedoch nicht in dem Masse, dass auch die Kosten für die Erzeugung des Sauerstoffs so weit kompensiert werden, dass Betriebskosten erreicht werden, wie sie für das Betreiben einer Gas-Luft-befeuerten Schmelzanlage mit regenerativer Wärmerückgewinnung üblich sind. Ein wichtiger Faktor ist hierbei der Wärmeinhalt der Abgase, die den Feuerungsraum verlassen. üblicherweise werden nämlich diese Abgase mit ihrem Wärmeinhalt nicht mehr für eine Wärmerückgewinnung genutzt, da die Energie direkt wieder der Schmelzanlage zugeführt wird.

Um die teilweise konträr wirkenden Ursachen und Ergebnisse bei Beachtung und Befolgung der Vorschriften gegen Umweltbelastungen und Energieverschwendung zu berücksichtigen, wurde zur Verbesserung der Energiebilanz durch Wärmerückgewinnung schon vielfach vorgeschlagen, den Wärmeüberschuss im Abgas dazu zu benutzen, die Feststoffe, also das Gemenge bzw. Beschickungsgut, und die Oxidationsgase für die Verbrennung vor dem Einbringen in die Glasschmelzwanne in externen Wärmetauschern vorzuwärmen.

Externe Wärmetauscher sind teure und wartungsanfällige Zusatzgeräte, die ihrerseits wieder Wärmeverluste verursachen, denn eine absolut undurchlässige Wärmeisolation ist nicht bekannt. Hinzu kommt, dass durch die Aufheizung bereits ein Vorschmelzen von einigen Komponenten des Gemenges auftritt, wodurch die Wärmeaustauschflächen verkleben und bei direktem Kontakt des Abgases mit dem Gemenge neben dem Vorschmelzen bestimmter Bestandteile auch noch ein Entmischen auftritt bzw. bestimmte Gemengebestandteile mitgenommen werden, wodurch der Staubgehalt der Abgase unzulässig erhöht wird bzw. wieder sehr aufwändige Staubfilter erforderlich werden. Ein Verkleben wird zusätzlich noch durch Wasser begünstigt, das in dem Beschickungsgut enthalten ist und in Wasserdampf umgesetzt wird, der aber auch in den Verbrennungsgasen enthalten sein kann.
So hat z.B. der Autor U. Trappe in seinem Aufsatz "Verfahrenstechnische Möglichkeiten zur Aufwärmung von Gemenge und Glasscherben mittels Abgas", veröffentlicht in der HGV-Mitteilung Nr. 1524 im August 1983, beschrieben, dass es bekannt ist, Ofenabgase auch in Wendelförderern zur Vorwärmung des Beschickungsguts im Gegenstrom zu verwenden. Es wird jedoch in der Zusammenfassung ausdrücklich darauf hingewiesen, dass insbesondere bei der Aufwärmung von Gemenge in Betracht gezogen werden muss, dass auch die Gefahr einer Entmischung und damit einer Veränderung der Zusammensetzung des Gemenges besteht. Durch die Druckschrift US-A-5 655 464 ist eine Glas-Schmelzanlage mit einem waagrechten und ebenen Boden und einem waagrechten und ebenen Schmelzenspiegel zu betreiben. Zwischen einem ersten Bereich, in dem zu schmelzendes Material auf dem fließenden Schmelzspiegel liegt, und einem zweiten Bereich, in dem das Material der Schmelze erwärmt und abgezogen wird, ist ein von der Decke der Schmelzanlage herunterhängender Gewölbebogen vorgesehen. Die Schmelz-/Raffinationskammer enthält zwei Bereiche, die durch den Gewölbebogen getrennt sind. Andererseits enthält das Dokument drei entscheidende Stellen darüber, dass das abziehende Verbrennungsgas dazu benutzt werden soll, das Beschickungsgut, nämlich die Glasrohstoffe, in externen Wärmetauschern vorzuheizen. Dabei kann der Schmelzkammer eine Vorheizkammer für das Beschickungsgut vorgeschaltet sein.

Auch durch die US 5,807,418 ist es bekannt, beim Einsatz von Oxidantien mit erhöhtem Sauerstoffanteil, sowohl das Beschickungsgut, den Glasrohstoff, als auch die verschiedenen Gase wie Luft, Sauerstoff und fossiles Brenngas mittels abgezogener Verbrennungsgase in externen Wärmetauschern vorzuwärmen und hierbei einen besonders kleinen Beschickungsbereich durch eine Strahlungswand abzugrenzen. Das bedingt mehrere Kreisläufe für die Gase und eine Vielzahl von Rohrleitungen. Da es hierfür und für die grossvolumigen Wärmetauscher keine absolut "wärmedichten" Isoliermittel gibt, sind ein erhöhter Brenngasverbrauch und ein Wärmeverlust an die Umwelt nicht zu vermeiden, wobei hinzukommt, dass ein vorzeitiger Abzug von Verbrennungsgasen gleichfalls eine Verlustquelle für den Feuerungsraum darstellt.

Der Erfindung liegt daher die Aufgabe zugrunde, einen Glasschmelzofen und ein Betriebsverfahren hierfür anzugeben, bei denen die teilweise konträr wirkenden Ursachen und Ergebnisse unter Beachtung und Befolgung der gesetzlichen Vorschriften gegen Umweltbelastungen und Energieverschwendung so weit wie möglich ohne Verwendung externer Wärmetauscher in eine gemeinsame Richtung gebracht und ein Vorschmelzen von Komponenten des Gemenges und ein Verkleben untereinander und mit den Wärmetauschflächen sowie ein Entmischen vermieden werden. Ferner sollen die Mitnahme bestimmter Gemengebestandteile und der Staubgehalt der Abgase und damit auch ein Einfluss auf die Glasqualität vermindert werden. Dabei soll die Emission von Stickoxiden bereits primärseitig in der Schmelzanlage gesenkt werden, ohne dass sich die Wirtschaftlichkeit verschlechtert und ohne dass zusätzliche Verfahren, zusätzliche Anlagen und zusätzliches Personal benötigt werden.

Diese Aufgabe wird erfindungsgemäss in Bezug auf den Glasschmelzofen bzw. auch entsprechend für das Verfahren zum Erschmelzen von Gläsern dadurch gelöst, dass:
a) zwischen dem Vorwärmbereich und dem Feuerungsraum eine einzige Strahlungswand mit einer Unterkante über dem Beschickungsgut angeordnet ist, durch die die Länge "Lv" des Vorwärmbereichs auf Werte von 15 bis 35 % der inneren Gesamtlänge "Lg" begrenzt und die Länge "Lf" des Feuerungsraums auf Werte von 65 bis 85 % der inneren Gesamtlänge ausgedehnt ist,
b) wobei im Vorwärmbereich unter Verzicht auf externe Vorwärmer eine ausschließlich ofeninterne Vorwärmung des Beschickungsguts erfolgt, wobei
c) der mindestens eine Auslass des Vorwärmbereichs für die Abgase ohne Zwischenschaltung eines Wärmetauschers mit der Atmosphäre verbunden ist, und
d) der konstruktive Füllstand "h2" des Glases über der Bodenerhebung zwischen 25 und 50 % des konstruktiven Füllstandes "h1" in der Wanne unmittelbar vor der Bodenerhebung beträgt.

Durch die Erfindung wird die obige Aufgabe gelöst und ein Glasschmelzofen und ein entsprechendes Betriebsverfahren hierfür angegeben, bei denen die teilweise konträr wirkenden Ursachen und Ergebnisse unter Beachtung und Befolgung der gesetzlichen Vorschriften gegen Umweltbelastungen und Energieverschwendung so weit wie möglich ohne Verwendung externer Wärmetauscher in eine gemeinsame Richtung gebracht und ein Vorschmelzen von Komponenten des Gemenges und ein Verkleben untereinander und mit den Wärmetauschflächen sowie ein Entmischen vermieden werden.

Ferner werden die Mitnahme bestimmter Gemengebestandteile und der Staubgehalt der Abgase und damit auch ein Einfluss auf die Glasqualität vermindert. Außerdem wird die Emission von Stickoxiden bereits primärseitig in der Schmelzanlage gesenkt, ohne dass sich die Wirtschaftlichkeit verschlechtert und ohne dass zusätzliche Verfahren, zusätzliche Anlagen und zusätzliches Personal benötigt werden. Insbesondere wird der spezifischen Energieverbrauch, bezogen auf die Tonne Glasschmelze, durch die Erfindung merklich verringert.

Es ist im Zuge weiterer Ausgestaltungen der Erfindung besonders vorteilhaft, wenn - entweder einzeln oder in Kombination - :
- im Vorwärmbereich im Wannenboden mindestens eine Reihe von Elektroden angeordnet ist,
- die Bubbler nahe dem Ende des Brennerbereichs vor der Bodenerhebung angeordnet sind,
- die Bubbler in einer Halteplatte angeordnet sind, deren Oberseite nach oben über den Wannenboden übersteht,
- der Wannenboden in Richtung auf die Läuterbank abfallend ausgebildet ist,
- der Wannenboden in Richtung auf die Läuterbank ansteigend ausgebildet ist,
- der Verlauf des Wannenbodens stufenweise erfolgt,
- der Homogenisierungsbereich hinter der Bodenerhebung einen konstruktiven Füllstand "h3" besitzt, der das 0,8-Fache bis 2,0-Fache des Füllstandes "h1" unmittelbar vor der Bodenerhebung beträgt,
- die Brenner in einem Brennerbereich "Bb" angeordnet sind, der vor der Bodenerhebung endet,
- zwischen der Wanne und dem Oberofen eine Beschickungsöffnung angeordnet ist, und/oder, wenn
- die Länge "LL" der Läuterbank in Strömungsrichtung zwischen 8 und15 % der Gesamtlänge "Lg" beträgt.

Die Erfindung betrifft auch ein Verfahren zum Erschmelzen von Gläsern, insbesondere aus der Gruppe der Kalk-Natrongläser, insbesondere Behälterglas oder Flachglas für Walzprozesse und technische Gläser, insbesondere Borosilikatglas oder Neutralglas, aus Beschickungsgut in einem Glasschmelzofen mit einer inneren Gesamtlänge "Lg", einer Wanne, einer Beschickungsöffnung, einem Vorwärmbereich und einem Feuerungsraum, der durch Brennstoffe beheizt wird, die aus fossilen Brennstoffen und einem Oxidationsgas mit mindestens 85 % Sauerstoff bestehen, wobei die Glasschmelze über eine Bodenerhebung geführt und vor dieser durch eine Reihe von Bubblern zunächst aufwärts bewegt wird.

Zur Lösung der gleichen Aufgabe und Erzielung der gleichen Vorteile ist eine solche Vorrichtung dadurch gekennzeichnet, dass:
a) das Beschickungsgut ohne externer Vorwärmung in die Beschickungsöffnung und auf die Glasschmelze eindosiert wird und innerhalb des Vorwärmbereichs auf einer Länge "Lv", die zwischen 15 und 35 % der Gesamtlänge "Lg" beträgt und durch eine einzige Strahlungswand begrenzt ist, aufgeheizt wird, wobei
b) das Beschickungsgut von oben durch Verbrennungsgase und Bubblergase aus dem Feuerungsraum beheizt wird, welche Gase unterhalb der Strahlungswand in den Vorwärmbereich zurückströmen und den Vorwärmbereich durch mindestens einen Auslass verlassen, wobei
c) das Beschickungsgut von unten durch einen Anteil der Glasschmelze beheizt wird, der mittels der Bubbler nach oben gefördert wird und danach unmittelbar unterhalb des Beschickungsguts in Richtung auf die Beschickungsöffnung zurückgeführt wird, wobei
d) ferner der Feuerungsraum jenseits der Strahlungswand eine Länge "Lf" zwischen 65 und 85 % der Gesamtlänge "Lg" besitzt und die Glasschmelze über die Reihe von Bubblern und danach über die Bodenerhebung in einen Homogenisierungsbereich geführt wird, wobei der konstruktive Füllstand "h2" des Glases über der Bodenerhebung zwischen 25 und 50 % des konstruktiven Füllstandes "h1" in der Wanne unmittelbar vor der Bodenerhebung beträgt,

Es ist dabei besonders vorteilhaft, wenn - entweder einzeln oder in Kombination -
- die Glasschmelze im Bedarfsfall von unten durch Elektroden beheizt wird und/oder wenn
- die Glasschmelze auf einer Länge zwischen 8 und 15% der Gesamtlänge "Lg" über die Bodererhebung geführt wird.

Der Effekt der Doppelbeheizung des Beschickungsguts von oben und von unten wird wie folgt erläutert: Einerseits werden durch die Verbrennung mit einem Oxidanten, der einen gegenüber Luft erhöhten Sauerstoffanteil aufweist, höhere Flammentemperaturen erreicht, andererseits werden aber die spezifischen Abgasmengen und - bei unverändertem Brennraumvolumen - auch die Strömungsgeschwindigkeiten verringert. Dadurch ergibt sich die Situation, dass der Wärmeeintrag in Bereich der Feuerung, also der strahlenden Flammen, vergleichsweise hoch ist, und dass im Bereich ausserhalb der Flammen und hier im Bereich der Gutbeschickung ein vergleichsweise geringerer Wärmeeintrag erfolgt. Darauf sind die bekannten Vorschläge - z.B. nach der US 5,807,418 - zurückzuführen, die die Anordnung von externen Wärmetauschern zum Vorwärmen von Beschickungsgut und Gasen vorschlagen. Der Erfindungsgegenstand geht nun durch den Einsatz von Bubblern und Bubblergasen einen anderen und vorteilhafteren Weg: Das Bubblergas erzeugt über jeder Eintrittsstelle einen starken Auftrieb in der Glasschmelze, wodurch die Rückströmung zum Beschickungsende des Ofens unterhalb des Beschickungsguts und dessen "Unterhitze" verstärkt wird. Gleichzeitig aber wird das Bubblergas bei seinem Aufstieg zumindest im wesentlichen auf die Temperatur der Glasschmelze aufgeheizt, die an dieser Stelle in der Regel den höchsten Wert aufweist. Dann aber mischt sich das Bubblergas durch die Sogwirkung der Brennergase diesen bei, wodurch die Gasmenge und die Strömungsgeschwindigkeit dieser Mischung über dem Beschickungsgut in Richtung auf das Beschickungsende vergrössert werden, und damit der Einfluss der "Oberhitze". Dieser sehr wirksame Wärmeeintrag findet ausschliesslich innerhalb des Ofens und daher auf kürzestem Wege statt und verbessert dadurch die Wärmebilanz und verringert den Bauaufwand, den Betriebs- und Wartungsaufwand und die Störanfälligkeit der ganzen Glasschmelz-Anlage. Erhalten bleibt dabei der geringe Anteil von Stickoxiden in den Abgasen.

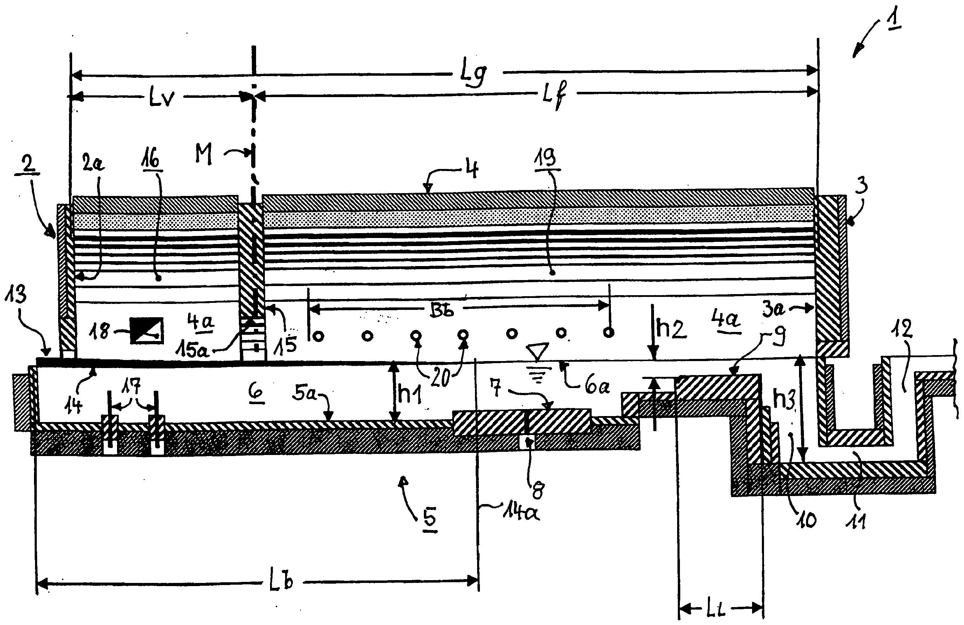

Ein Ausführungsbeispiel des Erfindungsgegenstandes und dessen Wirkungsweise und weitere Vorteile werden nachfolgend anhand der einzigen Figur näher erläutert. Diese zeigt einen vertikalen Längsschnitt durch die Mitte eines Glasschmelzofens.

Ein Oberofen 1 besitzt auf der Beschickungsseite eine erste Stirnwand 2 und auf der Entnahmeseite eine zweite Stirnwand 3, zwischen denen sich eine gewölbte Ofendecke 4 erstreckt. Die Ofendecke 4 geht beidseitig in senkrechte Seitenwände 4a über, von den hier nur die hintere sichtbar ist. Unter dem Oberofen 1 befindet sich eine Wanne 5, die zur Aufnahme und Behandlung einer Glasschmelze 6 dient, deren Schmelzenspiegel bei 6a angedeutet ist. Die Wanne 5 besitzt einen Wannenboden 5a, von dem eine Halteplatte 7 mit einer Reihe von Bubblern 8 nach oben ragt. Danach geht der Wannenboden 5a abgestuft in eine Bodenerhebung 9 über, und auf diese Bodenerhebung 9 folgen ein Homogenisierungsbereich 10 ein Bodendurchlass 11 und ein Aufstiegskanal 12.

Unter der Unterkante der Stirnwand 2 und über dem Schmelzenspiegel 6a befindet sich eine Beschickungsöffnung 13, die sich über die gesamte Breite der Wanne 5 erstreckt. Das Beschickungsgut 14, das hier ohne externe Vorwärmung aufgegeben wird, ist durch einen schlanken schwarzen Keil dargestellt, der an der Linie 14a endet. Die Länge dieses Bereichs innerhalb des Ofens wird als Beschickungslänge Lb bezeichnet.

Von wesentlicher Bedeutung sind hier die Anordnung und Raumlage einer einzigen senkrechten Strahlungswand 15, die von der Ofendecke 4 ausgeht und mit einer Unterkante 15a, die bogenförmig ausgebildetr sein kann, über dem Beschickungsgut 14 endet. Der Abstand des Scheitelpunkts der Unterkante 15a kann dabei je nach Ofengrösse zwischen 500 und 1500 mm gewählt werden. Der Strahlungswand 15 wird zur Vereinfachung der Beschreibung eine virtuelle senkrechte Mittenebene M zugeordnet. Die innere Gesamtlänge Lg des Ofens kann bis etwa 25 m betragen, die innere Breite bis etwa 10 m, jedoch sind diese Werte keine kritischen Grenzen.

Die Bubbler 8 sind die Ursache dafür, dass von ihren Bubblergase in Form von Blasenreihen aufsteigen, die einen starken Auftrieb der Glasschmelze 6 verursachen und insbesondere eine starke Rückströmung einer Teilmenge der Glasschmelze 6 unmittelbar unterhalb des Schmelzenspiegels 6a und dem Beschickungsgut 14 in Richtung auf die Beschickungsöffnung 13 erzeugen. Die stark aufgeheizten Bubbiergase werden nach dem Austritt aus der Glasschmelze 6 durch den Sog der Flammengase mitgerissen und mit diesen vermischt und verstärken dabei die Heizwirkung der Flammengase auf die Schmelze 6 und die Oberseite des Beschickungsguts 14, wie dies bereits weiter oben beschrieben wurde.

Wichtig ist hierbei, dass die Strahlungswand 15, bezogen auf ihre Mittenebene M, von der Innenseite 2a der Stirnwand 2 einen Abstand Lv besitzt, der zwischen 15 und 35 % der Gesamtlänge Lg beträgt. Dadurch entsteht ein Vorwärmbereich 16, der gegenüber dem Stand der Technik relativ kurz ist. In diesem Vorwärmbereich 16 können sich in der Glasschmelze 6 zusätzlich Elektroden 17 befinden, die im Wannenboden 5a vertikal in mindestens einer Reihe quer zur Längsachse des Ofens angeordnet sein können, wie in der Zeichnung dargestellt, alternativ aber auch horizontal in den Seitenwänden der Wanne 5. Gleichfalls im Vorwärmbereich 16 befindet sich in mindestens einer Seitenwand 4a mindestens ein Auslass 18 für die unterhalb der Strahlungswand 15 zugeführten Verbrennungs- und Bubblergase. Dadurch werden innerhalb einer relativ kurzen Strecke entsprechend Lv dem Beschickungsgut 14 dosiert aber ausreichend entsprechende Wärmemengen von oben und unten zugeführt, wodurch die Wärmebilanz entsprechend verbessert wird.

Die Strahlungswand 15 und die Innenseite 3a der zweiten Stirnwand 3 haben einen Abstand Lf, in dem sich ein Feuerungsraum 19 befindet. Dieser ist gekennzeichnet durch zwei Reihen von Brennern 20, die in den gegenüber liegenden Wänden 4a des Oberofens 1 in äquidistanter Verteilung innerhalb eines Brennerbereichs Bb angeordnet sind. Durch die Wirkung der Brenner 20 und der Strahlung der Wandflächen des Feuerungsraums 19 werden das Beschickungsgut 14 und die Glasschmelze 6 zunehmend aufgeheizt, bis die Schmelzentemperatur auf der Bodenerhebung 9 ein vorgegebenes Maximum erreicht. Die Brennergase strömen aus dem Feuerungsraum 19 unterhalb der Strahlungswand 15 in den Vorwärmbereich 16 und aus diesem durch den mindestens einen Auslass 18 in mindestens einen nicht gezeigten Abzugskamin. In Fortsetzung der obigen Längenberechnung ergibt sich, dass der Abstand Lf ein Längenverhältnis von 65 bis 85 % zur Gesamtlänge Lg bildet. Das Verhältnis der Länge L_{L} der Bodenerhebung zur Gesamtlänge Lg wird zweckmässig zwischen 0,5 und 15 % gewählt.

Innerhalb des Brennerbereichs Bb sind auf jeder Seite des Feuerungsraums 19 beispielhaft sieben Brenner 20 angeordnet, wobei der Brennerbereich Bb vor der Bodenerhebung 9 endet, da über dieser genügend Strahlungswärme zur Verfügung steht.

Durch die vertikale Förderwirkung der Bubbler 8 und ggf. auch der Elektroden 17 entsteht im Oberflächenbereich der Glasschmelze 6 eine Rückströmung des Glases in Richtung auf die Elektroden 17 und eine entgegengesetzte Bodenströmung von den Elektroden 17 in Richtung auf die Bubbler 8. Dieser Strömungseffekt begünstigt die Wärmeübergänge, insbesondere von der Glasschmelze 6 zum Beschickungsgut 14, wie gleichfalls bereits weiter oben beschrieben.

Zu den Füllstandshöhen ist folgendes auszuführen: h1 ist der Füllstand der Glasschmelze über dem Wannenboden 5a. Der Füllstand h1 kann sich über die Wannenlänge ändern, je nachdem, ob der Wannenboden in Richtung auf die Bodenerhebung ein Gefälle oder eine Steigung aufweist, wobei Gefälle und Steigung auch stufenförmig ausgebildet sein können.

Der Füllstand h2 der Glasschmelze über der Bodenerhebung 9 beträgt vorteilhaft zwischen 25 und 50 % von h1 unmittelbar vor der Bodenerhebung 9. Der Füllstand im Vorwärmbereich 16 ist maximal so hoch wie der Füllstand unmittelbar vor der Bodenerhebung, wobei das Verhältnis zwischen 80 und 100 % liegen kann. In Strömungsrichtung hinter der Bodenerhebung 9 wird für den Füllstand h3 im Homogenisierungsbereich 10 vorteilhaft ein Wert gewählt, der zwischen 0,8-Fachen und dem 2-Fachen von h1 unmittelbar vor der Bodenerhebung 9 beträgt.

Der Kern der Erfindung besteht in einem Glasschmelzofen mit einer Wanne 5 und einem Oberofen 1 mit einer Ofendecke 4 und einer inneren Gesamtlänge "Lg", mit einem Vorwärmbereich 16 für Beschickungsgut 14 und mit einem Feuerungsraum 19 mit Brennern 20 und Bubblern 8. Zur Lösung der genannten Aufgabe wird erfindungsgemäss vorgeschlagen, dass: zwischen dem Vorwärmbereich 16 und dem Feuerungsraum 19 eine einzige Strahlungswand 15 angeordnet ist, durch die die Länge "Lv" des Vorwärmbereichs 16 auf Werte von 15 bis 35 % der inneren Gesamtlänge "Lg" begrenzt und die Länge "Lf" des Feuerungsraums 19 auf Werte von 65 bis 85 % der inneren Gesamtlänge "Lg" ausgedehnt ist, dass ferner der Vorwärmbereich 16 für eine ausschliesslich ofeninterne Vorwärmung des Beschickungsguts 14 ausgelegt ist, dass ferner eine Gasquelle für das Oxidationsgas einen Sauerstoffanteil von mindestens 85 Volumens-% Sauerstoff enthält, und dass ausserdem mindestens ein Auslass 18 des Vorwärmbereichs 16 für die Abgase ohne Zwischenschaltung eines Wärmetauschers mit der Atmosphäre verbunden ist.

### Bezugzeichenliste:

- 1: Oberofen
- 2: Stirnwand
- 2a: Innenseite
- 3: Stirnwand
- 3a: Innenseite
- 4: Ofendecke
- 4a: Seitenwände
- 5: Wanne
- 5a: Wannenboden
- 6: Glasschmelze
- 6a: Schmelzenspiegel
- 7: Halteplatte
- 8: Bubbler
- 9: Bodenerhebung
- 10: Homogenisierungsbereich
- 11: Bodendurchlass
- 12: Aufstiegskanal
- 13: Beschickungsöffnung
- 14: Beschickungsgut
- 14a: Linie
- 15: Strahlungswand
- 15a: Unterkante
- 16: Vorwärmbereich
- 17: Elektroden
- 18: Auslass
- 19: Feuerungsraum
- 20: Brenner
- Bb: Brennerbereich
- h1: Füllstand Wanne 5
- h2: Füllstand Läuterbank 9
- h3: Füllstand Homogenisierungsbereich 10
- Lb: Beschickungslänge
- Lf: Abstand
- Lg: Gesamtlänge
- LL: Länge Läuterbank 9
- Lv: Abstand
- M: Mittenebene

## Patentansprüche

1. Glasschmelzofen für das Erschmelzen von Gläsern, insbesondere aus der Gruppe der Kalk-Natrongläser, insbesondere Behälterglas, oder Flachglas für Walzprozesse und technische Gläser, insbesondere Borosilikatglas oder Neutralglas, mit einer Wanne (5) und einem Oberofen (1) mit einer Ofendecke (4) und einer inneren Gesamtlänge (Lg), die gemeinsam einen Vorwärmbereich (16) für Beschickungsgut (14) mit mindestens einem Auslass (18) für Abgase, einen Feuerungsraum (19) mit Brennern (20), eine sich über die gesamte Wannenbreite erstreckende Bodenerhebung (9), einen Homogenisierungsbereich (10), einen Bodendurchlass (11) sowie einen Aufstiegskanal (12) für die Glasschmelze (6) aufweisen, wobei den Brennern (20) außer einem Anschluss für fossile Brennstoffe eine Gasquelle mit einem Sauerstoffanteil von mindestens 85 Volumenprozent Sauerstoff aufgeschaltet ist, und wobei im Feuerungsraum (19) vor der Bodenerhebung (9) mindestens eine Reihe von Bubblern (8) angeordnet ist, **dadurch gekennzeichnet,**
a) **dass** zwischen dem Vorwärmbereich (16) und dem Feuerungsraum (19) eine einzige Strahlungswand (15) mit einer Unterkante über dem Beschickungsgut (14) angeordnet ist, durch die die Länge (Lv) des Vorwärmbereichs (16) auf Werte von 15 bis 35 % der inneren Gesamtlänge (Lg) begrenzt und die Länge (Lf) des Feuerungsraums (19) auf Werte von 65 bis 85 % der inneren Gesamtlänge (Lg) ausgedehnt ist,
b) wobei im Vorwärmbereich (16) eine ausschließlich ofeninterne Vorwärmung des Beschickungsguts (14) erfolgt,
c) wobei der mindestens eine Auslass (18) des Vorwärmbereichs (16) für die Abgase direkt mit der Atmosphäre verbunden ist, und
d) der konstruktive Füllstand (h2) des Glases über der Bodenerhebung (9) zwischen 25 % und 50 % des konstruktiven Füllstandes (h1) in der Wanne (5) unmittelbar vor der Bodenerhebung (9) beträgt.

2. Glasschmelzofen nach Anspruch 1, **dadurch gekennzeichnet, dass** im Vorwärmbereich (16) im Wannenboden (5a) mindestens eine Reihe von Elektroden (17) angeordnet ist.

3. Glasschmelzofen nach Anspruch 1, **dadurch gekennzeichnet, dass** die Bubbler (8) nahe dem Ende des Brennerbereich (Bb) vor der Bodenerhebung (9) angeordnet sind.

4. Glasschmelzofen nach Anspruch 3, **dadurch gekennzeichnet, dass** die Bubbler (8) in einer Halteplatte (7) angeordnet sind, deren Oberseite nach oben über den Wannenboden (5a) übersteht.

5. Glasschmelzofen nach Anspruch **1, dadurch gekennzeichnet, dass** der Wannenboden (5a) in Richtung auf die Bodenerhebung (9) abfallend ausgebildet ist.

6. Glasschmelzofen nach Anspruch **1, dadurch gekennzeichnet, dass** der Wannenboden (5a) in Richtung auf die Bodenerhebung (9) ansteigend ausgebildet ist.

7. Glasschmelzofen nach einem der Ansprüche 5 und 6, **dadurch gekennzeichnet, dass** der Verlauf des Wannenbodens (5a) stufenweise erfolgt.

8. Glasschmelzofen nach Anspruch **1, dadurch gekennzeichnet, dass** der Homogenisierungsbereich (10) hinter der Bodenerhebung (9) einen konstruktiven Füllstand (h3) besitzt, der das 0,8-Fache bis 2,0-Fache des Füllstandes (h1) unmittelbar vor der Bodenerhebung beträgt.

9. Glasschmelzofen nach Anspruch 1, **dadurch gekennzeichnet, dass** die Brenner (20) in einem Brennerbereich (Bb) angeordnet sind, der vor der Bodenerhebung (9) endet.

10. Glasschmelzofen nach Anspruch 1, **dadurch gekennzeichnet, dass** zwischen der Wanne (5) und dem Oberofen (1) eine Beschickungsöffnung (13) angeordnet ist.

11. Glasschmelzofen nach Anspruch 1, **dadurch gekennzeichnet, dass** die Länge der Bodenerhebung (9) in Strömungsrichtung zwischen 0,5 und 15 % der Gesamtlänge (Lg) beträgt.

12. Verfahren zum Erschmelzen von Gläsern, insbesondere aus der Gruppe der Kalk-Natrongläser, insbesondere Behälterglas, oder Flachglas für Walzprozesse und technische Gläser, insbesondere Borosilikatglas oder Neutralglas, aus Beschickungsgut (14) in einem Glasschmelzofen mit einer inneren Gesamtlänge (Lg), einer Wanne (5), einer Beschickungsöffnung (13), einem Vorwärmbereich (16) und einem Feuerungsraum (19), der durch Brennstoffe beheizt wird, die aus fossilen Brennstoffen und einem Oxidationsgas mit mindesten 85 % Sauerstoff bestehen, wobei die Glasschmelze (6) über eine Bodenerhebung (9) geführt und vor dieser durch eine Reihe von Bubblern (8) zunächst aufwärts bewegt wird, **dadurch gekennzeichnet, dass**
a) das Beschickungsgut (14) ohne externe Vorwärmung in die Beschickungsöffnung (13) und auf die Glasschmelze (6) eindosiert und innerhalb des Vorwärmbereichs (16) auf einer Länge (Lv), die zwischen 15 und 35 % der Gesamtlänge (Lg) beträgt und durch eine einzige Strahlungswand (15) begrenzt ist, aufgeheizt wird , wobei
b) das Beschickungsgut (14) von oben durch Verbrennungsgase und Bubblergase aus dem Feuerungsraum (19) beheizt wird, welche Gase unterhalb der Strahlungswand (15) in den Vorwärmbereich (16) zurückströmen und den Vorwärmbereich (16) durch mindestens einen Auslass (18) verlassen, und wobei
c) das Beschickungsgut (14) von unten durch einen Anteil der Glasschmelze (6) beheizt wird, der mittels der Bubbler (8) nach oben gefördert wird und danach unmittelbar unterhalb des Beschickungsguts (14) in Richtung auf die Beschickungsöffnung (13) zurückgeführt wird, wobei
d) ferner der Feuerungsraum (19) jenseits der Strahlungswand (15) eine Länge (Lf) zwischen 65 und 85 % der Gesamtlänge (Lg) besitzt und die Glasschmelze (6) über die Reihe von Bubblern (8) und danach über die Bodenerhebung (9) in einen Homogenisierungsbereich (10) geführt wird, wobei der konstruktive Füllstand (h2) des Glases über der Bodenerhebung (9) zwischen 25 und 50 % des konstruktiven Füllstandes (h1) in der Wanne (5) unmittelbar vor der Bodenerhebung (9) beträgt.

13. Verfahren nach Anspruch 12, **dadurch gekennzeichnet, dass** die Glasschmelze (6) im Bedarfsfall von unten durch Elektroden (17) beheizt wird.

14. Verfahren nach Anspruch 12, **dadurch gekennzeichnet, dass** die Glasschmelze (6) auf einer Länge zwischen 0,5 und 15 % der Gesamtlänge (Lg) über die Bodenerhebung (9) geführt wird.

## Claims

1. A glass melting oven for melting glass, in particular from the group of soda-lime glasses, in particular container glass or flat glass for rolling processes and industrial glass, in particular borosilicate glass or neutral glass, having a pan (5) and an upper furnace (1) with a furnace roof (4) and a total internal length (Lg), which jointly have a preheating area (16) for charging material (14) with at least one outlet (18) for exhaust gas, a furnace chamber (19) with burners (20), a bottom elevation (9) extending over the total width of the pan, a homogenizing area (10), a bottom passage (11) and a rising channel (12) for the glass melt (6), wherein a gas source having an oxygen component of at least 85 vol% oxygen is connected to the burners (20) except for a connection for fossil fuels, and wherein at least one row of bubblers (8) is arranged in the furnace chamber (19) upstream from the bottom elevation (9),
**characterized in that**
a) a single radiant wall (15) having a lower edge is arranged above the charging material (14) between the preheating area (16) and the furnace chamber (19) by means of which the length (Lv) of the preheating area (16) is limited to levels of 15 % to 35 % of the total internal length (Lg), and the length (Lf) of the furnace chamber (19) is extended to values of 65 % to 85% of the total internal length (Lg),
b) wherein preheating of the chamber charging material (14) takes place exclusively internally in the furnace in the preheating area (16),
c) wherein the at least one outlet (18) of the preheating area (16) for the exhaust gas is connected directly to the atmosphere, and
d) the structural filling level (h2) of the glass above the bottom elevation (9) is between 25 % and 50 % of the structural filling level (h1) in the pan (5) directly upstream from the bottom elevation (9).

2. The glass melting furnace according to claim 1,**characterized in that** at least one row of electrodes (17) is arranged in the preheating area (16) in the pan bottom (5a).

3. The glass melting furnace according to claim 1, **characterized in that** the bubblers (8) are arranged close to the end of the burner area (Bb) upstream from the bottom elevation (9).

4. The glass melting furnace according to claim 3, **characterized in that** the bubblers (8) are arranged in a holding plate (7), the top side of which protrudes above the pan bottom (5a) at the top.

5. The glass melting furnace according to claim 1, **characterized in that** the pan bottom (5a) is designed with to decline in the direction of the bottom elevation (9).

6. The glass melting furnace according to claim 1, **characterized in that** the pan bottom (5a) is designed to rise in the direction of the bottom elevation (9).

7. The glass melting furnace according to any one of claims 5 and 6, **characterized in that** the shape of the pan bottom (5a) has steps.

8. The glass melting furnace according to claim 1, **characterized in that** the homogenization area (10) behind the bottom elevation (9) has a structural filling level (h3) amounting to 0.8 times to 2.0 times the filling level (h1) directly upstream from the bottom elevation.

9. The glass melting furnace according to claim 1, **characterized in that** the burners (20) are arranged in a burner area (Bb), which ends upstream from the bottom elevation (9).

10. The glass melting furnace according to claim 1, **characterized in that** a charging opening (13) is arranged between the pan (5) and the upper furnace (1) .

11. The glass melting furnace according to claim 1, **characterized in that** the length of the bottom elevation (9) in the direction of flow is between 0.5 % and 15 % of the total length (Lg).

12. A method for melting glasses, in particular from the group of soda-lime glasses, in particular container glass or flat glass for rolling operations and industrial glass, in particular borosilicate glass or neutral glass from charging material (14) in a glass melting furnace having a total internal length (Lg), a pan (5), a charging opening (13), a preheating area (16) and a furnace chamber (19), which is heated by fuels consisting of fossil fuels and an oxidation gas with at least 85% oxygen, wherein the glass melt (6) is guided over a bottom elevation (9) and is moved upwards at first upstream from the bottom elevation through a series of bubblers (8), **characterized in that**
a) the charging material (14) is fed into the charging opening (13) without external preheating and onto the glass melt (6) and is heated within the preheating area (16) for a length (Lv) amounting to between 15 % and 35 % of the total length (Lg) and bordered by a single radiant wall (15), wherein
b) the charging material (14) is heated from above by combustion gases and bubbler gases out of the furnace chamber (19), said gases flowing beneath the radiant wall (15) into the preheating area (16) and leaving the preheating area (16) through at least one outlet (18), and wherein
c) the charging material (14) is heated from beneath by a portion of the glass melt (6), which is conveyed upward by means of the bubblers (8) and then is returned directly beneath the charging material (14) in the direction of the charging opening (13), wherein
d) the furnace chamber (19) beyond the radiant wall (15) also has a length (Lf) between 65 % and 85 % of the total length (Lg), and the glass melt (6) is guided over a row of bubblers (8) and then over the bottom elevation (9) into a homogenization area (10), wherein the structural filling level (h2) of the glass above the bottom elevation (9) amounts to between 25 % and 50 % of the structural filling level (h1) in the pan (5) immediately upstream from the bottom elevation (9) .

13. The method according to claim 12, **characterized in that** the glass melt (6) is heated from beneath by electrodes (17),d if needed.

14. The method according to claim 12, **characterized in that** the glass melt (6) is guided for a length between 0.5 % and 15 % of the total length (Lg) over the bottom elevation (9).

## Revendications

1. Four de verrerie qui est destiné à obtenir, en mettant en oeuvre une fusion, des verres issus notamment du groupe des verres sodo-calciques, s'agissant plus particulièrement de verre creux d'emballage, de verre plat destiné à des processus de laminage et des verres techniques, s'agissant plus particulièrement de verre borosilicate ou de verre neutre, et qui comporte une cuve (5) et un four supérieur (1) ayant un plafond de four (4) et une longueur intérieure totale (Lg), l'ensemble des éléments précités comportant une zone de préchauffage (16), qui est destinée à une charge (14) et qui comporte au moins une sortie (18) pour des gaz d'échappement, un foyer (19) pourvu de brûleurs (20), un partie de fond surélevée (9) laquelle s'étend sur l'intégralité de la largeur de la cuve, une zone d'homogénéisation (10), un passage dans fond (11) ainsi qu'un canal de montée (12) destiné au verre en fusion(6), les brûleurs (20) étant branchés, outre la connexion destinée aux combustibles fossiles, à une source de gaz ayant une proportion d'oxygène d'au moins 85 % en volume d'oxygène, et au moins une rangée de barboteurs (8) étant disposée dans le foyer (19) en amont de la partie de fond surélevée (9), **caractérisé en ce que**
a) une seule paroi radiante (15) dont le bord inférieur est situé au-dessus de la charge (14) est disposée entre la zone de préchauffage (16) et le foyer (19), servant ainsi à limiter la longueur (Lv) de la zone de préchauffage (16) à des valeurs représentant 15 à 35 % de la longueur intérieure totale (Lg), la longueur (Lf) du foyer (19) s'étendant ainsi de manière à ce que ses valeurs représentent 65 à 85 % de la longueur intérieure totale (Lg),
b) la zone de préchauffage (16) est destinée à soumettre à charge (14) à un préchauffage réalisé exclusivement à l'intérieur du four,
c) l'au moins une sortie (18) de la zone de préchauffage (16), destinée à des gaz d'échappement, est directement reliée à l'atmosphère, et
d) l'épaisseur de couche inhérente (h2) du verre au-dessus de la partie de fond surélevée (9) correspond à des valeurs comprises entre 25 % et 50 %, par rapport à l'épaisseur de couche inhérente (h1) dans la cuve (5) directement en amont de la partie de fond surélevée (9).

2. Four de verrerie selon la revendication 1, **caractérisé en ce qu'**au moins une rangée d'électrodes (17) est disposée au sein de la zone de préchauffage (16) dans le fond (5a) de la cuve.

3. Four de verrerie selon la revendication 1, **caractérisé en ce que** les barboteurs (8) sont disposés proche de l'extrémité de la zone de brûleurs (Bb) en amont de la partie de fond surélevée (9).

4. Four de verrerie selon la revendication 3, **caractérisé en ce que** les barboteurs (8) sont disposés dans une plaque de support (7) sont la face supérieure dépasse le fond (5a) de la cuve (5a) vers le haut.

5. Four de verrerie selon la revendication 1, **caractérisé en ce que** le fond (5a) de la cuve est réalisé de manière à ce qu'il s'abaisse vers la partie de fond surélevée (9).

6. Four de verrerie selon la revendication 1, **caractérisé en ce que** le fond (5a) de la cuve est réalisé de manière à ce qu'il remonte vers la partie de fond surélevée (9).

7. Four de verrerie selon l'une des revendications 5 et 6, **caractérisé en ce que** le fond (5a) de la cuve suit une évolution par paliers.

8. Four de verrerie selon la revendication 1, **caractérisé en ce que** la zone d'homogénéisation (10), située en aval de la partie de fond surélevée (9) présente une épaisseur de couche inhérente (h3) correspondant à 0,8 à 2,0 fois l'épaisseur de couche (h1) directement en amont de la partie de fond surélevée.

9. Four de verrerie selon la revendication 1, **caractérisé en ce que** les brûleurs (8) sont disposés dans une zone de brûleurs (Bb) dont l'extrémité est située en amont de la partie de fond surélevée (9).

10. Four de verrerie selon la revendication 1, **caractérisé en ce qu'**une ouverture (13) d'introduction de la charge est disposée entre la cuve (5) et le four supérieure (1).

11. Four de verrerie selon la revendication 1, **caractérisé en ce que** la longueur de la partie de fond surélevée (9) correspond, dans le sens de l'écoulement, à 0,5 à 15 % de la longueur totale (Lg).

12. Procédé permettant d'obtenir à partir d'une charge (14) des verres issus notamment du groupe des verres sodo-calciques, s'agissant plus particulièrement de verre creux d'emballage, de verre plat destiné à des processus de laminage et des verres techniques, s'agissant plus particulièrement de verre borosilicate ou de verre neutre, en mettant en oeuvre une fusion dans un four de verrerie ayant une longueur intérieure totale (Lg) et comportant une cuve (5), une ouverture (13) d'introduction de la charge, une zone de préchauffage (16) et un foyer (19) chauffé au moyen de combustibles constitués de combustibles fossiles et d'un comburant gazeux comportant au moins 85 % d'oxygène, le verre en fusion (6) étant passé à travers une partie de fond surélevée (9) et entraîné d'abord vers le haut par une rangée de barboteurs (8), **caractérisé en ce que**
a) la charge (14) est passée, sans être préchauffée à l'extérieur, par l'ouverture (13) d'introduction de la charge pour arriver sur le verre en fusion (6) et être chauffée au sein de la zone de préchauffage (16) laquelle s'étend sur une longueur (Lv) comprise entre 15 et 35 % de la longueur totale (Lg) et laquelle est délimitée par une seule paroi radiante (15),
b) la charge (14) est chauffée par le haut au moyen des gaz de combustion et des gaz de barboteurs issus du foyer (19), lesdits gaz refluant en-dessous de la paroi radiante (15) dans la zone de préchauffage (16) pour quitter la zone de préchauffage (16) à travers au moins une sortie (18), et
c) la charge (14) étant chauffée par la bas au moyen d'une partie du verre en fusion (6) laquelle est entraînée par le barboteur (8) vers le haut pour ensuite être renvoyée, directement en-dessous de la charge (14), vers l'ouverture (13) d'introduction de la charge,
d) le foyer (19) présentant, en outre, de l'autre côté de la paroi radiante (15), une longueur (Lf) comprise entre 65 et 85 % de la longueur totale (Lg), et le verre en fusion (6) étant passé, à travers une rangée de barboteurs (8) puis à travers la partie de fond surélevée (9), dans une zone d'homogénéisation (10), le verre présentant au-dessus de la partie de fond surélevée (9) une épaisseur de couche (h2) correspondant à 25 à 50 % de l'épaisseur se couche inhérente (h1) dans la cuve (5) directement en amont de la partie de fond surélevée (9).

13. Procédé selon la revendication 12, **caractérisé en ce que** la verre en fusion (6) est chauffé, en cas de besoin, par le bas au moyen d'électrodes (17).

14. Procédé selon la revendication 12, **caractérisé en ce que** le verre en fusion (6) est passé à travers la partie de fond surélevée (9) sur une longueur correspondant à 0,5 à 15 % de la longueur totale (Lg).
